# EUROPEAN PATENT APPLICATION

(11) **EP 4 671 088 A1**
(43) Date of publication of application: **31.12.2025**
(21) Application number: 24760019.0
(22) Date of filing: 25.01.2024
(51) Int. Cl.: B62B 3/02, B60P 1/00, B60P 3/11, B62B 3/10, B64F 1/227

(54) **FLIGHT VEHICLE TRANSPORT CART, FLIGHT VEHICLE TRANSPORT SYSTEM, CONTAINER, AND FLIGHT VEHICLE TRANSPORT METHOD**

(30) Priority: 24.02.2023 JP 2023027440
(71) Applicant: Kawasaki Motors, Ltd., Akashi-shi, Hyogo 673-8666 (JP)
(72) Inventor: FURUHASHI, Kenichi, Akashi-shi, Hyogo 673-8666 (JP)
(74) Representative: Witte, Weller & Partner Patentanwälte mbB
(86) International application number: PCT/JP2024/002254
(87) International publication number: WO 2024/176712

(57) **Abstract**

A flight vehicle carrier is a carrier that carries a flight vehicle. The flight vehicle carrier includes: a base supporting the flight vehicle; and at least one leg located at the base. The leg includes: a leg main body coupled to the base; a wheel attached to the leg main body; and a mover structure that makes the leg main body move between a stored state and a deployed state, the stored state being a state where the wheel is located closest to the base in an upper-lower direction of the carrier, the deployed state being a state where the wheel is separated downward from the base as compared to the stored state.

## Description

### Technical Field

The present disclosure relates to a flight vehicle carrier, a flight vehicle carrying system, a container, and a flight vehicle carrying method.

### Background Art

PTL 1 discloses a handling/takeoff cart on which an airplane is placed.

### Citation List

### Patent Literature

PTL 1: Published Japanese Translation of PCT Application No. 10-509113

### Summary of Invention

### Technical Problem

According to the configuration of PTL 1, work of placing the airplane on the cart requires a conveying apparatus, such as a crane, and it is difficult to perform such work in a short period of time.

An object of one aspect of the present disclosure is to facilitate conveyance work of a flight vehicle.

### Solution to Problem

A flight vehicle carrier according to one aspect of the present disclosure is a carrier that carries a flight vehicle. The flight vehicle carrier includes: a base supporting the flight vehicle; and at least one leg located at the base. The leg includes a leg main body coupled to the base, a wheel attached to the leg main body, and a mover structure that makes the leg main body move between a stored state and a deployed state, the stored state being a state where the wheel is located closest to the base in an upper-lower direction of the carrier, the deployed state being a state where the wheel is separated downward from the base as compared to the stored state.

A flight vehicle carrying system according to one aspect of the present disclosure includes: a carrier that carries a flight vehicle; and a container that accommodates the carrier supporting the flight vehicle. The carrier includes a base including a locked body and supporting the flight vehicle and at least one leg located at the base. The leg includes a leg main body coupled to the base, a wheel attached to the leg main body, and a mover structure that makes the leg main body move between a stored state and a deployed state, the stored state being a state where the wheel is located closest to the base in an upper-lower direction of the carrier, the deployed state being a state where the wheel is separated downward from the base as compared to the stored state. The container includes a floor surface defining an accommodating space, an opening that opens the accommodating space in a horizontal direction, a guide rail located on the floor surface and extending toward the opening, and a slider that slides on the guide rail and includes a locking portion that locks the locked body of the carrier.

A container according to one aspect of the present disclosure is a container that accommodates a carrier supporting a flight vehicle. The container includes: a floor surface defining an accommodating space; an opening that opens the accommodating space in a horizontal direction; a guide rail located on the floor surface and extending toward the opening; and a slider that slides on the guide rail and locks a locked body of the carrier.

A flight vehicle carrying method according to one aspect of the present disclosure is a method of mounting a flight vehicle on a carrier and carrying the flight vehicle, the carrier including a base supporting the flight vehicle and at least one leg located at the base, the leg including a leg main body coupled to the base, a wheel attached to a tip portion of the leg main body, and a mover structure that makes the leg main body move between a stored state and a deployed state, the stored state being a state where the wheel is located closest to the base in an upper-lower direction of the carrier, the deployed state being a state where the wheel is separated downward from the base as compared to the stored state, the method including: setting the leg main body to the stored state and placing the carrier on a floor surface higher than a ground surface; and moving the carrier on the floor surface, setting the leg main body to the deployed state, and landing the wheel on the ground surface.

### Advantageous Effects of Invention

According to the flight vehicle carrier of one aspect of the present disclosure, since a dimension of the carrier in the upper-lower direction is reduced by setting the leg main body to the stored state, the carrier can be compactly placed on the floor surface higher than the ground surface. On the other hand, since the leg main body is set to the deployed state, and the wheel is landed on the ground surface lower than the floor surface, the carrier can be made to move smoothly even when there is a level difference between the floor surface and the ground surface. Therefore, work of conveying the flight vehicle can be facilitated.

According to the flight vehicle carrying system of one aspect of the present disclosure, the work of conveying the flight vehicle by using the container can be facilitated.

According to the container of one aspect of the present disclosure, when the carrier gets out of the container through the opening, the slider locks and guides the carrier. Therefore, the posture of the carrier can be stabilized.

According to the flight vehicle carrying method of one aspect of the present disclosure, even when there is a level difference between the floor surface and the ground surface, the carrier can be made to move smoothly. Thus, the work of conveying the flight vehicle can be facilitated.

### Brief Description of Drawings

FIG. 1 is a side view showing a high-height state of a flight vehicle carrier according to Embodiment 1.
FIG. 2 is a perspective view of a mover structure of the flight vehicle carrier of FIG. 1.
FIG. 3 is a perspective view of a base of the flight vehicle carrier of FIG. 1.
FIG. 4 is a side view showing a first low-height state of the flight vehicle carrier of FIG. 1.
FIG. 5 is a side view showing a second low-height state of the flight vehicle carrier of FIG. 1.
FIG. 6 is a side view showing a launch state of the flight vehicle carrier of FIG. 1.
FIG. 7 is a side view of a truck vehicle including a container that accommodates the flight vehicle carrier of FIG. 4.
FIG. 8A is a side view showing a guide rail and slider of the container of FIG. 7. FIG. 8B is a sectional view showing the guide rail and the slider shown in FIG. 8A.
FIG. 9 is a diagram for explaining a method of carrying a flight vehicle by using the flight vehicle carrier of FIG. 1 and the truck vehicle of FIG. 7.
FIG. 10 is a diagram for explaining the method of carrying the flight vehicle by using the flight vehicle carrier of FIG. 1 and the truck vehicle of FIG. 7.
FIG. 11 is a diagram for explaining the method of carrying the flight vehicle by using the flight vehicle carrier of FIG. 1 and the truck vehicle of FIG. 7.
FIG. 12 is a perspective view of a modified example of a holding structure of FIG. 1.
FIG. 13 is a side view of the flight vehicle carrier according to Embodiment 2.
FIG. 14 is a side view of the flight vehicle carrier according to Embodiment 3.

### Description of Embodiments

Hereinafter, embodiments will be described with reference to the drawings.

### Embodiment 1

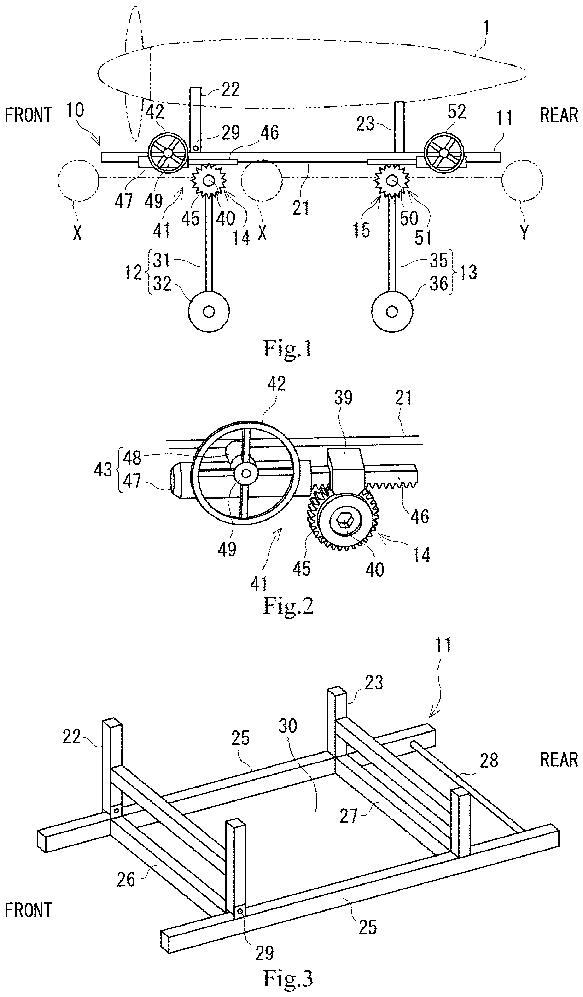

FIG. 1 is a side view showing a high-height state of a flight vehicle carrier 10 according to Embodiment 1. As shown in FIG. 1, the flight vehicle carrier 10 is a cart that carries a flight vehicle 1 and also serves as a launch pad for the flight vehicle 1. Examples of the flight vehicle 1 include aircrafts. The flight vehicle 1 is, for example, an aircraft that is launched by jetting. A front-rear direction of the carrier 10 corresponds to a front-rear direction of the flight vehicle 1 supported by the carrier 10. The flight vehicle carrier 10 includes a base 11, a front leg 12, a rear leg 13, a front mover structure 14, and a rear mover structure 15.

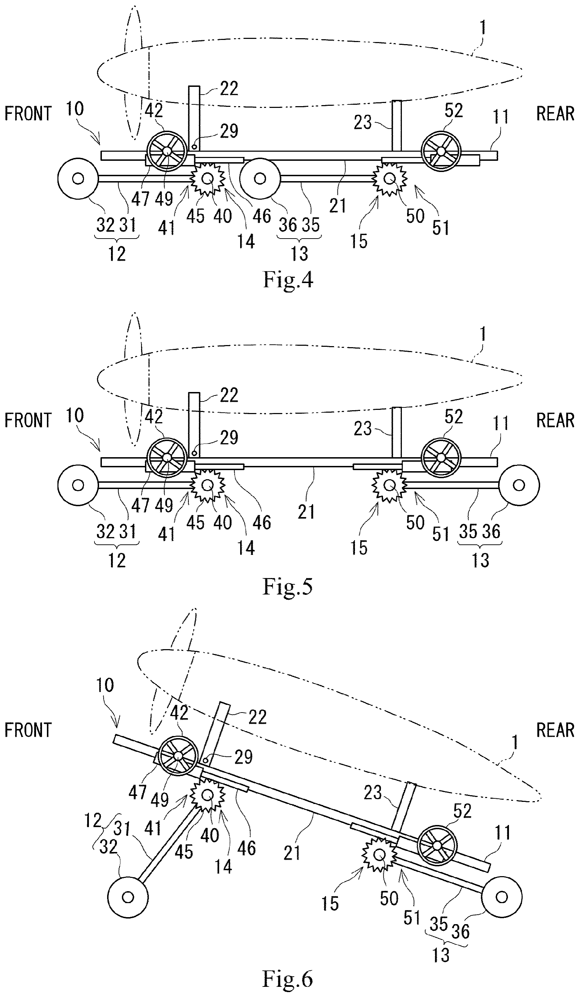

The base 11 is a body that supports the flight vehicle 1. The base 11 includes: a frame 21; a front support 22 supported by a front portion of the frame 21; and a rear support 23 supported by a rear portion of the frame 21. The frame 21 extends in a horizontal direction when the carrier 10 is in a high-height state (FIG. 1) and a low-height state (FIGS. 4 and 5). For example, a dimension of the frame 21 in the front-rear direction is larger than a dimension of the frame 21 in a left-right direction.

The front support 22 and the rear support 23 project upward from the frame 21 and support the flight vehicle 1 from below. For example, the front support 22 is higher than the rear support 23. As one example, the front support 22 includes a swing shaft 29 extending in the left-right direction and can swing so as to fall forward. The rear support 23 is fixed to the frame 21 but may be able to swing so as to fall forward.

The front leg 12 and the rear leg 13 are in connection with the frame 21 and support the frame 21 from below. The front leg 12 and the rear leg 13 are located away from each other in the front-rear direction of the carrier 10. The front leg 12 is in connection with the front portion of the frame 21, and the rear leg 13 is in connection with the rear portion of the frame 21. The front leg 12 includes a leg main body 31 and a pair of wheels 32 that are left and right wheels 32. A base end portion of the leg main body 31 is coupled to the frame 21 through the front mover structure 14. The right wheel 32 is attached to a right side of a tip portion of the leg main body 31, and the left wheel 32 is attached to a left side of the tip portion of the leg main body 31. The rear leg 13 includes a leg main body 35 and wheels 36. Since the rear leg 13 is similar in configuration to the front leg 12, a detailed explanation thereof is omitted.

The front mover structure 14 couples the leg main body 31 of the front leg 12 to the frame 21 such that the wheels 32 of the front leg 12 are displaceable relative to the frame 21 in an upper-lower direction. Similarly, the rear mover structure 15 couples the leg main body 35 of the rear leg 13 to the frame 21 such that the wheels 36 of the rear leg 13 are displaceable relative to the frame 21 in the upper-lower direction.

Specifically, the front mover structure 14 includes: a swing shaft 40 which is fixed to the base end portion of the leg main body 31 and rotatably supported by the frame 21; a front handle 42 operated by a user; and a front interlocking structure 41 that reduces the speed of the rotation of the front handle 42 and rotates the swing shaft 40. Similarly, the rear mover structure 15 includes: a swing shaft 50 which is fixed to a base end portion of the leg main body 35 and rotatably supported by the frame 21; a rear handle 52 operated by the user; and a rear interlocking structure 51 that reduces the speed of the rotation of the rear handle 52 and rotates the swing shaft 50.

The front mover structure 14 and the rear mover structure 15 are independent from each other. The rear mover structure 15 is basically similar in configuration to the front mover structure 14. Therefore, the following will mainly describe the front mover structure 14, and a detailed explanation of the rear mover structure 15 is omitted.

In the front mover structure 14, the swing shaft 40 includes a horizontal axis, more specifically, includes a left-right axis. When the swing shaft 40 rotates, the leg main body 31 swings around the left-right axis relative to the frame 21. The leg main body 31 of the front leg 12 swings in an angular range of substantially 90° by the rotation of the swing shaft 40. To be specific, the leg main body 31 swings between a forward stored state X in which the wheels 32 are located in front of the swing shaft 40 and a deployed state in which the leg main body 31 extends vertically downward from the swing shaft 40. The stored state may also be called a low-height state. The deployed state may also be called a high-height state. The angular range of the swing of the leg main body 31 of the front leg 12 is not limited to 90° and may exceed 90°.

The leg main body 35 of the rear leg 13 swings in the angular range of substantially 180° by the rotation of the swing shaft 50. To be specific, the leg main body 35 of the rear leg 13 swings between a forward stored state X in which the wheels 36 are located in front of the swing shaft 50 and a rearward stored state Y in which the wheels 36 are located behind the swing shaft 50. The angular range of the swing of the leg main body 35 of the rear leg 13 is not limited to 180° and may be less than 180°.

When the leg main bodies 31 and 35 are in the stored state, the wheels 32 and 36 are located closest to the base 11 in the upper-lower direction of the carrier 10. FIG. 1 shows the deployed state in which the leg main bodies 31 and 35 extend in a vertical direction such that the wheels 32 and 36 are separated downward from the base 11. The deployed state of the leg main body 35 of the rear leg 13 is an intermediate state between the forward stored state and the rearward stored state. When the leg main bodies 31 and 35 are in the deployed state, the wheels 32 and 36 are located farthest from the base 11 in the upper-lower direction of the carrier 10. The angles of the leg main bodies 31 and 35 during the use of the flight vehicle carrier 1 can be suitably selected in accordance with an inclined posture required for each intended use. For example, a holding structure 43 may be configured such that the leg main body 31 or 35 can select an arbitrary angle between the stored state of the leg main body 31 or 35 and the deployed state of the leg main body 31 or 35.

FIG. 2 is a perspective view of the front mover structure 14 of the flight vehicle carrier 1 of FIG. 1. As shown in FIG. 2, in the front mover structure 14, the rotation of the front handle 42 is transmitted to the swing shaft 40 through the front interlocking structure 41. The front interlocking structure 41 includes a pinion 45, a rack 46, a worm wheel 47, a worm gear 48, and a rotating shaft 49. The pinion 45 is fixed to an outer periphery of the swing shaft 40. The rack 46 meshes with the pinion 45. For example, the rack 46 extends in the front-rear direction of the carrier 10. The rack 46 is guided by a rack support 39 fixed to the frame 21. The rack support 39 restricts the rotation of the rack 46 around a front-rear axis while allowing the movement of the rack 46 in the front-rear direction.

The worm wheel 47 includes an axis that coincides with a direction in which the rack 46 extends. The worm wheel 47 has a tubular shape including an inner peripheral surface on which an internal thread is located. The rack 46 includes an external thread that is threadedly engaged with the internal thread of the inner peripheral surface of the worm wheel 47. To be specific, the rack 46 and the worm wheel 47 constitute a ball screw structure. The worm gear 48 is fixed to an outer periphery of the rotating shaft 49 and meshes with the worm wheel 47. The front handle 42 is fixed to the rotating shaft 49. When the user rotates the front handle 42 by his/her hand, the worm gear 48 rotates in association with the rotation of the rotating shaft 49. When the rotation of the worm gear 48 is transmitted to the worm wheel 47, the rotational movement of the worm wheel 47 is converted into the translatory movement of the rack 46. The rack 46 that performs the translatory movement rotates the pinion 45, and this rotates the swing shaft 40.

The rotation of the front handle 42 is reduced in speed when being transmitted from the worm gear 48 to the worm wheel 47, is further reduced in speed when being transmitted from the worm wheel 47 to the rack 46, and is transmitted from the rack 46 to the pinion 45. The front interlocking structure 41 reduces the speed of the rotation of the front handle 42 and rotates the swing shaft 40, and the leg main body 31 swings by the rotation of the swing shaft 40.

A set of the worm gear 48 and the worm wheel 47 has a self-lock function. The worm wheel 47 is larger in diameter than the worm gear 48, and the rotation of the worm wheel 47 is lower in speed than the rotation of the worm gear 48. The worm gear 48 can drive the worm wheel 47, but the worm wheel 47 cannot drive the worm gear 48. To be specific, the swing shaft 40 can be rotated by applying external rotational force to the front handle 42, but the front handle 42 cannot be rotated by applying the external rotational force to the swing shaft 40. Therefore, the worm gear 48 and the worm wheel 47 serve as the holding structure 43 that holds the leg main body 31 in an intermediate state between the deployed state and the stored state.

FIG. 3 is a perspective view of the base 11 of the flight vehicle carrier 10 of FIG. 1. As shown in FIG. 3, the frame 21 of the base 11 includes a pair of side beams 25, a front cross beam 26, a rear cross beam 27, and a locked body 28. The pair of side beams 25 extend in the front-rear direction of the carrier 10 while being located away from each other in the left-right direction of the carrier 10. The front cross beam 26 extends in the left-right direction of the carrier 10 and couples front portions of the pair of side beams 25 to each other. The rear cross beam 27 extends in the left-right direction of the carrier 10 and couples rear portions of the pair of side beams 25 to each other.

The base 11 includes a work opening 30 surrounded by the pair of side beams 25, the front cross beam 26, and the rear cross beam 27 in a plan view. At least when the carrier 10 is in the high-height state, the work opening 30 is not closed by the other parts of the carrier 10. To be specific, the carrier 10 includes the work opening 30 that is open in the upper-lower direction over the entirety of the carrier 10. Thus, the user can access a bottom surface of the flight vehicle 1, supported by the carrier 10, through the work opening 30 from below.

The base 11 includes the locked body 28 locked by a locking portion 85 of a slider 75 of a below-described container 63. For example, the locked body 28 is fixed to the rear portion of the frame 21. The locked body 28 is, for example, a rod that extends in the left-right direction so as to couple the pair of side beams 25 to each other.

FIG. 4 is a side view showing a first low-height state of the flight vehicle carrier 10 of FIG. 1. As shown in FIG. 4, according to the carrier 10 in the first low-height state, the leg main body 31 of the front leg 12 and the leg main body 35 of the rear leg 13 are in the forward stored state by the rotation operations of the front handle 42 and the rear handle 52. In this state, a dimension of the front leg 12 in the upper-lower direction and a dimension of the rear leg 13 in the upper-lower direction are the smallest. In this state, the front leg 12 projects forward beyond a front end of the base 11. The rear leg 13 does not project forward beyond the front end of the base 11 and does not project rearward beyond a rear end of the base 11. In this state, lower ends of the wheels 32 and 36 correspond to a lower end of the carrier 10. To be specific, when the carrier 10 is in the first low-height state, and the wheels 32 and 36 roll on a ground surface, the carrier 10 can move on the ground surface.

FIG. 5 is a side view showing a second low-height state of the flight vehicle carrier 10 of FIG. 1. As shown in FIG. 5, according to the carrier 10 in the second low-height state, by the rotation operations of the front handle 42 and the rear handle 52, the leg main body 31 of the front leg 12 is in the forward stored state, and the leg main body 35 of the rear leg 13 is in the rearward stored state. In this state, as with FIG. 4, the dimension of the front leg 12 in the upper-lower direction and the dimension of the rear leg 13 in the upper-lower direction are the smallest. In this state, the front leg 12 projects forward beyond the front end of the base 11, and the rear leg 13 projects rearward beyond the rear end of the base 11. In this state, the lower ends of the wheels 32 and 36 correspond to the lower end of the carrier 10. To be specific, when the carrier 10 is in the second low-height state, and the wheels 32 and 36 roll on the ground surface, the carrier 10 can move on the ground surface.

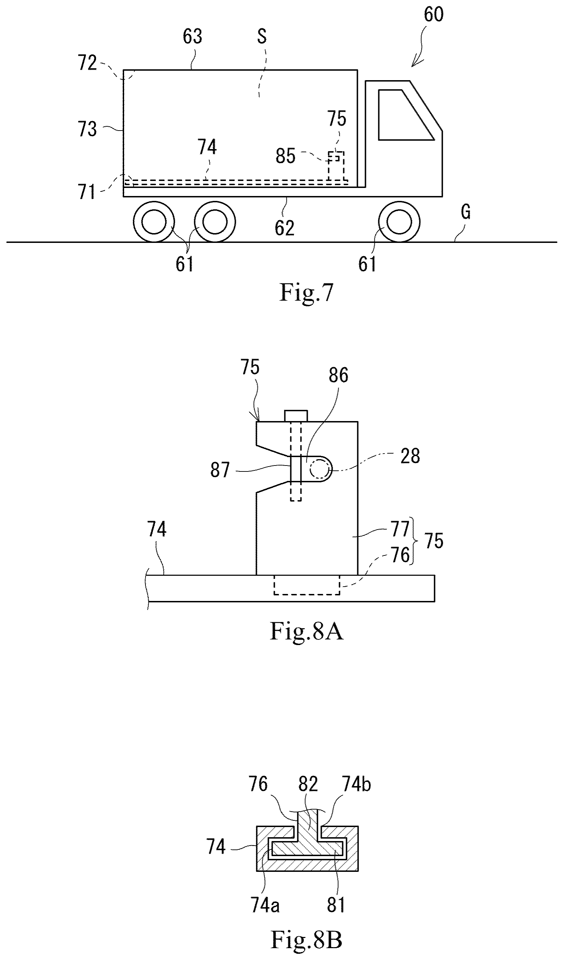

The dimension of the carrier 10 in the front-rear direction in the state of FIG. 4 is smaller than the dimension of the carrier 10 in the front-rear direction in the state of FIG. 5. Therefore, the carrier 10 in the state of FIG. 4 is compact in the front-rear direction, and therefore, is easily accommodated in the container 63 (see FIG. 7). A distance between the front wheel 32 and the rear wheel 36 in the carrier 10 in the state of FIG. 5 is longer than a distance between the front wheel 32 and the rear wheel 36 in the carrier 10 in the state of FIG. 4. Therefore, the stability of the carrier 10 on the ground in the state of FIG. 5 when the carrier 10 supports the flight vehicle 1 is high.

FIG. 6 is a side view showing a launch state of the flight vehicle carrier 10 of FIG. 1. As shown in FIG. 6, according to the carrier 10 in the launch state, the wheels 32 of the front leg 12 are separated farther downward from the base 11 than the wheels 36 of the rear leg 13. For example, the leg main body 3 of the front leg 12 extends diagonally forward and downward in the intermediate state between the forward stored state and the deployed state, and the leg main body 35 of the rear leg 13 is in the rearward stored state. Thus, the base 11 is in such an inclined posture as to extend diagonally upward and forward. A nose of the flight vehicle 1 supported by the carrier 10 in this state is directed to a diagonally forward and upward side. To be specific, the carrier 10 can be utilized as a flight vehicle launch pad.

According to the carrier 10 in the launch state, force which makes the leg main body 31 swing such that the leg main body 31 becomes the forward stored state acts on the leg main body 31 by the gravity acting on the base 11 and the flight vehicle 1. However, since the worm gear 48 and the worm wheel 47 serve as the holding structure 43 that holds the leg main body 31 in a current state, the inclined posture of the leg main body 31 is maintained.

FIG. 7 is a side view of a truck vehicle 60 including the container 63 that accommodates the flight vehicle carrier 10 of FIG. 4. As shown in FIG. 7, the truck vehicle 60 includes wheels 61, a vehicle body 62 supported by the wheels 61, and the container 63 mounted on the vehicle body 62. The container 63 has a cuboid shape and defines an accommodating space S. The container 63 includes: a floor surface 71 defining the accommodating space S from below; a ceiling surface 72 defining the accommodating space S from above; and an opening 73 that opens the accommodating space S to a rear side of the truck vehicle 60. The floor surface 71 of the container 63 is higher than a ground surface G on which the wheels 61 roll. The container 63 includes a guide rail 74 and the slider 75. The guide rail 74 is located on the floor surface 71 and extends in a vehicle front-rear direction toward the opening 73. The slider 75 slides on the guide rail 74. The slider 75 includes the locking portion 85 that locks the carrier 10.

FIG. 8A is a side view showing the guide rail 74 and slider 75 of the container 63 of FIG. 7. FIG. 8B is a sectional view showing the guide rail 74 and the slider 75 shown in FIG. 8A. As shown in FIGS. 8A and 8B, the guide rail 74 includes a slide space 74a and a slit 74b that opens the slide space 74a to an upper side. The slit 74b extends in a longitudinal direction of the guide rail 74 and is smaller in width than the slide space 74a. The slider 75 includes a slide portion 76 and a slider main body portion 77 fixed to the slide portion 76. The slide portion 76 includes: a bottom portion 81 accommodated in the slide space 74a of the guide rail 74; and a projecting portion 82 projecting upward from the bottom portion 81 and extending upward through the slit 74b. A portion of the slider 75 which contacts the guide rail 74 may include a wheel or a ball.

The slider main body portion 77 is fixed to an upper end portion of the projecting portion 82 of the slide portion 76. The slider main body portion 77 includes the locking portion 85. The locking portion 85 includes, for example, a groove 86 that is open toward the opening 73 of the container 63. The locked body 28 of the carrier 10 is inserted into the groove 86. The locking portion 85 includes a retaining body 87 that prevents the locked body 28, which has been inserted into the groove 86, from coming out from the groove 86. The retaining body 87 may be a bolt that can be located so as to close an entrance of the groove 86. However, the retaining body 87 is not limited to this and may be a member that prevents the locked body 28, which has been inserted into the groove 86, from coming out from the groove 86 toward the opening 73 of the container 63.

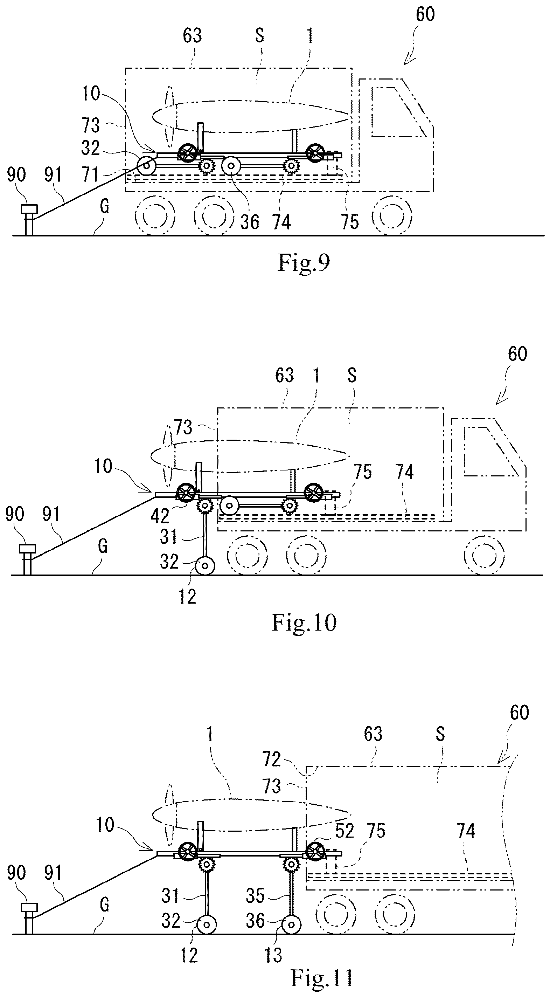

FIGS. 9 to 11 are diagrams for explaining a method of carrying the flight vehicle 1 by using the flight vehicle carrier 10 of FIG. 1 and the truck vehicle 60 of FIG. 7. As shown in FIG. 9, the carrier 10 supporting the flight vehicle 1 is set to the first low-height state and is placed on the floor surface 71 of the container 63. To be specific, the carrier 10 that is in the first low-height state and supports the flight vehicle 1 is accommodated in the accommodating space S of the container 63. At this time, a front side of the flight vehicle 1 and a front side of the carrier 10 are directed to a rear side of the truck vehicle 60. Then, when the truck vehicle 60 travels and arrives at a destination, the user drives a peg 90 in the ground surface G at a position behind the truck vehicle 60 (i.e., in front of the carrier 10) with the carrier 10 in the container 63. The user connects the carrier 10 to the peg 90 through a rope 91. From this state, the truck vehicle 60 is further made to travel to the front side of the truck vehicle 60 (i.e., to the rear side of the carrier 10).

Thus, as shown in FIG. 10, the container 63 moves horizontally relative to the carrier 10, and the wheels 32 and 36 roll on the floor surface 71. Then, the carrier 10 is pulled out from the container 63 through the opening 73 of the container 63. When the front leg 12 gets out of the container 63, the user operates the front handle 42 to set the leg main body 31 of the front leg 12 to the deployed state, and the wheels 32 of the front leg 12 are landed on the ground surface G. From this state, the truck vehicle 60 is made to further travel to the front side of the truck vehicle 60 (i.e., the rear side of the carrier 10).

Then, as shown in FIG. 11, the container 63 further moves horizontally relative to the carrier 10, and the carrier 10 is further pulled out from the container 63 through the opening 73 of the container 63. When the rear leg 13 gets out of the container 63, the user operates the rear handle 52 to set the leg main body 35 of the rear leg 13 to the deployed state, and the wheels 36 of the rear leg 13 are landed on the ground surface G.

In the process in which the carrier 10 is pulled out from the container 63, since the the slider 75 locks and guides the carrier 10, the posture of the carrier 10 is stabilized. Then, when the retaining body 87 (see FIG. 8A) of the slider 75 is detached, the locked body 28 of the carrier 10 gets out of the groove 86, and the carrier 10 is completely pulled out from the container 63 and becomes the state of FIG. 1.

According to this, even when there is a level difference between the floor surface 71 and the ground surface G, the carrier 10 can be made to move smoothly between the floor surface 71 and the ground surface G. Moreover, the carrier 10 does not have to include a power source that pulls out the carrier 10 from the container 63. Then, in the state of FIG. 1, the user mounts a detachable object (such as a camera, a sensor, or a cargo) on the flight vehicle 1, supported by the base 11, through the work opening 30 (see FIG. 3) of the carrier 10 from a lower side of the flight vehicle 1.

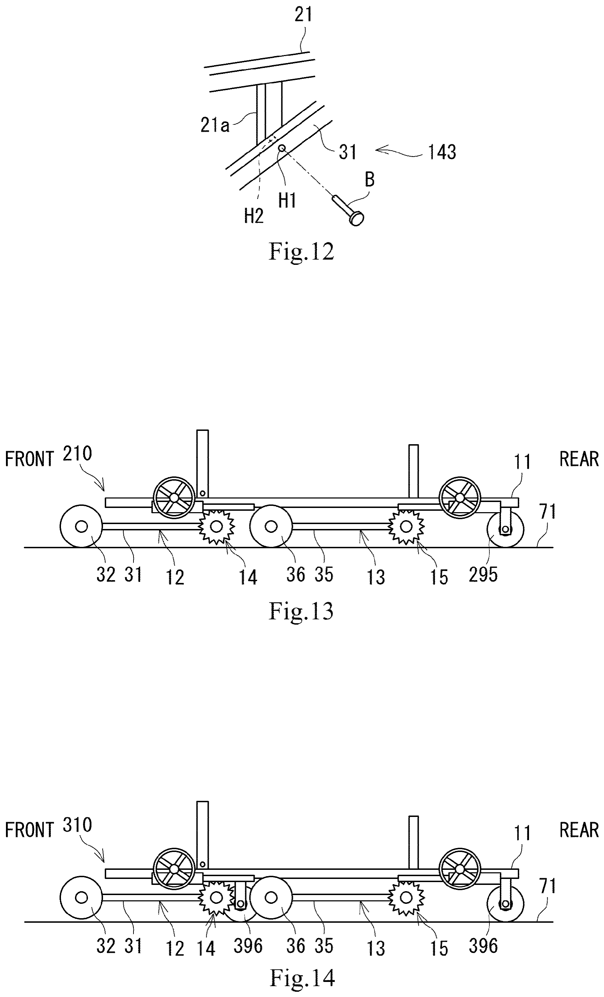

FIG. 12 is a perspective view of a modified example of the holding structure 43 of FIG. 2. As shown in FIG. 12, a holding structure 143 according to the modified example includes a bolt B or a pin which positions the leg main body 31, which is in the intermediate state and extends diagonally relative to the vertical direction and the horizontal direction, on the frame 21. The frame 21 includes a portion 21a overlapping the leg main body 31, which is in the intermediate state and extends diagonally, in the horizontal direction. In this state, a hole H1 of the leg main body 31 and a hole H2 of the portion 21a of the frame 21 coincide with each other, and the bolt B or the pin is inserted into the holes H1 and H2. Thus, the leg main body 31 is held in the intermediate state between the deployed state and the stored state. According to this modified example, the worm gear 48 and the worm wheel 47 may be omitted. In addition, an outer peripheral surface of the rotating shaft 49 of the handle 42 may include a spur gear that meshes with the rack 46, and the rotation of the rotating shaft 49 may be directly converted into the linear movement of the rack 46.

### Embodiment 2

FIG. 13 is a side view of a flight vehicle carrier 210 according to Embodiment 2. The same reference signs are used for the same components as Embodiment 1, and the repetition of the same explanation is avoided. As shown in FIG. 13, the carrier 210 according to Embodiment 2 includes an additional wheel 295 attached to the base 11. The additional wheel 295 is not displaceable relative to the base 11 in the upper-lower direction of the carrier 210. When the leg main bodies 31 and 35 are in the forward stored state in the front-rear direction of the carrier 210, the additional wheel 295 is located behind the wheels 32 and 36. When the leg main bodies 31 and 35 are in the forward stored state in the front-rear direction of the carrier 210, a lower end of the additional wheel 295 is substantially the same in height as the lower ends of the wheels 32 and 36. According to this, when the carrier 210 moves from the floor surface 71 toward the ground surface, and the wheels 32 of the front leg 12 and the wheels 36 of the rear leg 13 move to the outside of the floor surface 71, the additional wheel 295 rolls on the floor surface 71. Thus, the carrier 210 can be made to move smoothly from the floor surface 71 to the ground surface. Moreover, the guide rail 74 and the slider 75 can be omitted from the container 63. Since the other components are the same as those in Embodiment 1, explanations thereof are omitted.

### Embodiment 3

FIG. 14 is a side view of a flight vehicle carrier 310 according to Embodiment 3. The same reference signs are used for the same components as Embodiment 1, and the repetition of the same explanation is avoided. As shown in FIG. 14, the carrier 310 according to Embodiment 3 includes additional wheels 396 which are attached to the base 11 and located away from each other in the front-rear direction. The additional wheels 396 are not displaceable relative to the base 11 in the upper-lower direction of the carrier 310. The front additional wheel 396 is attached to a front portion of the base 11, and the rear additional wheel 396 is attached to a rear portion of the base 11.

When the leg main bodies 31 and 35 are in the forward stored state in the front-rear direction of the carrier 310, lower ends of the additional wheels 396 are located lower than the lower ends of the wheels 32 and 36. According to this, when the additional wheels 396 roll on the floor surface 71, the carrier 310 can be made to move smoothly from the floor surface 71 to the ground surface regardless of the wheels 32 of the front leg 12 and the wheels 36 of the rear leg 13. Moreover, the guide rail 74 and the slider 75 can be omitted from the container 63. Since the other components are the same as those in Embodiment 1, explanations thereof are omitted.

The technology of the present disclosure is not limited to the above embodiments. For example, the mover structure 14, 15 is not limited to a structure that makes the leg main body 31, 35 swing, and may be a structure that makes the leg main body slide in the vertical direction such that the wheels 32, 36 are displaced relative to the base 11 in the upper-lower direction. The leg main body 31 of the front leg 12 may swing in the angular range of 180° between the forward stored state and the rearward stored state. The leg main body 35 of the rear leg 13 may swing in the angular range of 90° between the deployed state and one of the forward stored state and the rearward stored state. An electric motor may be used instead of the handle 42, 52. To be specific, the swing shaft 40, 50 may be rotated electrically instead of being rotated manually. The floor surface 71 is not limited to the floor surface of the container and may be, for example, a floor surface in a factory.

The foregoing has described the embodiments as examples of the technology disclosed in the present application. However, the technology in the present disclosure is not limited to these and is applicable to embodiments in which modifications, replacements, additions, omissions, and the like have been suitably made. Moreover, a new embodiment may be prepared by combining the components described in the above embodiments. For example, some of components or methods in one embodiment may be applied to another embodiment. Some components in an embodiment may be separated from the other components in the embodiment and arbitrarily extracted. Furthermore, the components shown in the attached drawings and the detailed explanations include not only components essential to solve the problems but also components for exemplifying the above technology and not essential to solve the problems.

The following aspects disclose preferred embodiments.

### First Aspect

A flight vehicle carrier that carries a flight vehicle,
the flight vehicle carrier including:
a base supporting the flight vehicle; and
at least one leg located at the base, the leg including
   a leg main body coupled to the base,
   a wheel attached to the leg main body, and
   a mover structure that makes the leg main body move between a stored state and a deployed state, the stored state being a state where the wheel is located closest to the base in an upper-lower direction of the carrier, the deployed state being a state where the wheel is separated downward from the base as compared to the stored state.

According to this configuration, since a dimension of the carrier in the upper-lower direction is reduced by setting the leg main body to the stored state, the carrier can be compactly placed on the floor surface higher than the ground surface. On the other hand, since the leg main body is set to the deployed state, and the wheel is landed on the ground surface lower than the floor surface, the carrier can be made to move smoothly even when there is a level difference between the floor surface and the ground surface. Therefore, work of conveying the flight vehicle can be facilitated.

### Second Aspect

The flight vehicle carrier according to the first aspect, wherein the at least one leg includes a front leg and a rear leg which are located away from each other in a front-rear direction of the carrier.

According to this configuration, in a state where the entire carrier is landed on the ground surface, the legs can stably support the base.

### Third Aspect

The flight vehicle carrier according to the second aspect, wherein the mover structure of the front leg and the mover structure of the rear leg are independent from each other.

According to this configuration, in a state where the carrier supporting the flight vehicle is landed on the ground surface, the wheel of the front leg is separated downward from the base as compared to the wheel of the rear leg. Thus, the nose of the flight vehicle supported by the carrier can be directed to a diagonally upward side. Therefore, the carrier can be utilized as a flight vehicle launch pad.

### Fourth Aspect

The flight vehicle carrier according to the third aspect, further including a holding structure that holds the leg main body in an intermediate state between the deployed state and the stored state.

According to this configuration, the leg main body can be held in the intermediate state between the deployed state and the stored state, and a launch posture in which the nose of the flight vehicle supported by the carrier is directed to a diagonally upward side can be maintained.

### Fifth Aspect

The flight vehicle carrier according to any one of the first to fourth aspects, wherein the mover structure includes a swing shaft that makes the leg main body swing around a horizontal axis relative to the base.

According to this configuration, the height of the base relative to the wheel can be changed by a simple structure.

### Sixth Aspect

The flight vehicle carrier according to any one of the second to fourth aspects, wherein:
each of the mover structures includes a swing shaft that makes the leg main body swing around a horizontal axis relative to the base; and
the stored state of the leg main body of the rear leg includes
   a forward stored state where the wheel is located in front of the swing shaft and
   a rearward stored state where the wheel is located behind the swing shaft.

According to this configuration, by setting the leg main body of the rear leg to the forward stored state, the carrier becomes compact in the front-rear direction, and the carrier can be easily accommodated in the container. On the other hand, by setting the leg main body of the rear leg to the rearward stored state, the distance between the wheel of the front leg and the wheel of the rear leg becomes long even though the legs are in the stored state. Thus, the stability of the carrier on the ground surface which supports the flight vehicle can be improved. Moreover, by setting the leg main body of the front leg to the deployed state and setting the leg main body of the rear leg to the rearward stored state, the base can be set to such an inclined posture as to extend diagonally upward and forward. Therefore, the nose of the flight vehicle supported by the carrier can be directed to a diagonally forward and upward side, and the carrier can be utilized as the flight vehicle launch pad.

### Seventh Aspect

The flight vehicle carrier according to the fifth or sixth aspect, wherein the mover structure further includes:
a handle operated by a user; and
an interlocking structure that reduces speed of rotation of the handle and rotates the swing shaft.

According to this configuration, the leg main body of the carrier supporting the flight vehicle that is large in weight can be easily made to swing manually by the user.

### Eighth Aspect

The flight vehicle carrier according to any one of the first to seventh aspects, wherein when the leg main body is in the stored state, a lower end of the wheel corresponds to a lower end of the carrier.

According to this configuration, since the wheel rolls on the floor surface when the leg main body is in the stored state, the carrier supporting the flight vehicle can be easily made to move on the floor surface.

### Ninth Aspect

The flight vehicle carrier according to any one of the first to eighth aspects, further including an additional wheel which is attached to the base and is located behind the wheel when the leg main body is in the stored state in a front-rear direction of the carrier.

According to this configuration, when the carrier moves from the floor surface toward the ground surface, and the wheel of the leg moves to the outside of the floor surface, the additional wheel rolls on the floor surface, and thus, the carrier can be made to move smoothly from the floor surface to the ground surface.

### Tenth Aspect

The flight vehicle carrier according to any one of the first to ninth aspects, wherein:
the base includes
   a frame supported by the leg,
   a front support supported by the frame and supporting the flight vehicle, and
   a rear support supported by the frame and supporting the flight vehicle; and
the frame includes
   a pair of side beams extending in a front-rear direction of the carrier while being located away from each other in a left-right direction of the carrier,
   a front cross beam extending in the left-right direction and coupling front portions of the pair of side beams to each other, and
   a rear cross beam extending in the left-right direction and coupling rear portions of the pair of side beams to each other,
the carrier further including a work opening that is surrounded by the pair of side beams, the front cross beam, and the rear cross beam in a plan view and is open in the upper-lower direction.

According to this configuration, since the bottom surface of the flight vehicle supported by the carrier is accessible through the work opening of the carrier, the work of accessing the flight vehicle from the lower side can be easily performed.

### Eleventh Aspect

A flight vehicle carrying system including:
a carrier that carries a flight vehicle; and
a container that accommodates the carrier supporting the flight vehicle, wherein:
   the carrier includes
      a base including a locked body and supporting the flight vehicle and
      at least one leg located at the base;
   the leg includes
      a leg main body coupled to the base,
      a wheel attached to the leg main body, and
      a mover structure that makes the leg main body move between a stored state and a deployed state, the stored state being a state where the wheel is located closest to the base in an upper-lower direction of the carrier, the deployed state being a state where the wheel is separated downward from the base as compared to the stored state; and
   the container includes
      a floor surface and a ceiling surface which define an accommodating space,
      an opening that opens the accommodating space in a horizontal direction,
      a guide rail located on the floor surface and extending toward the opening, and
      a slider that slides on the guide rail and includes a locking portion that locks the locked body of the carrier.

According to this configuration, the work of conveying the flight vehicle by using the container can be facilitated.

### Twelfth Aspect

A container that accommodates a carrier supporting a flight vehicle,
the container including:
a floor surface and a ceiling surface which define an accommodating space;
an opening that opens the accommodating space in a horizontal direction;
a guide rail located on the floor surface and extending toward the opening; and
a slider that slides on the guide rail and includes a locking portion that locks a locked body of the carrier.

According to this configuration, when the carrier gets out of the container through the opening, the slider locks and guides the carrier. Therefore, the posture of the carrier can be stabilized.

### Thirteenth Aspect

A method of mounting a flight vehicle on a carrier and carrying the flight vehicle,
the carrier including
   a base supporting the flight vehicle and
   at least one leg located at the base,
the leg including
   a leg main body coupled to the base,
   a wheel attached to a tip portion of the leg main body, and
   a mover structure that makes the leg main body move between a stored state and a deployed state, the stored state being a state where the wheel is located closest to the base in an upper-lower direction of the carrier, the deployed state being a state where the wheel is separated downward from the base as compared to the stored state,
the method including:
   setting the leg main body to the stored state and placing the carrier on a floor surface higher than a ground surface; and
   moving the carrier on the floor surface, setting the leg main body to the deployed state, and landing the wheel on the ground surface.

According to this method, even when there is a level difference between the floor surface and the ground surface, the carrier can be made to move smoothly. Therefore, the work of conveying the flight vehicle can be facilitated.

### Fourteenth Aspect

The method according to the thirteenth aspect, wherein the at least one leg includes a front leg and a rear leg which are located away from each other in a front-rear direction of the carrier,
the method further including:
positioning the carrier on the ground surface in a state where at least part of the carrier is placed on the floor surface; and
in a state where the carrier is positioned on the ground surface, moving the floor surface relative to the ground surface such that the floor surface separates from the carrier.

According to this method, the carrier does not have to include a power source that pulls out the carrier from the floor surface toward the ground surface. Therefore, the structure of the carrier can be simplified.

### Fifteenth Aspect

The method according to the thirteenth or fourteenth aspect, wherein:
the at least one leg includes a front leg and a rear leg which are located away from each other in a front-rear direction of the carrier; and
the carrier further includes a work opening that is located between the front leg and the rear leg and is open in the upper-lower direction,
the method further including, in a state where the wheel of the front leg and the wheel of the rear leg are landed on the ground surface, mounting a detachable object on the flight vehicle, supported by the base, through the work opening from a lower side of the flight vehicle.

According to this method, in a state where the carrier is landed on the ground surface, the work of mounting the detachable object is performed. Therefore, the detachable object can be easily attached in accordance with the intended use of the flight vehicle. Thus, is unnecessary to attach the detachable object to the flight vehicle before the flight vehicle is carried. This can improve the versatility of the flight vehicle. For example, cargoes necessary at the destination of the flight vehicle can be attached during preparation for the launch. Thus, the ease of work is improved as compared to when the detachable object is attached to the flight vehicle before the flight vehicle is carried. For example, in the case of taking images, the detachable object may be a camera, a sensor, a transceiver, or the like. In the case of performing distribution work, the detachable object may be a distributor that distributes distributed objects (fertilizers, seeds, or agricultural chemicals). In the case of performing carrying work, the detachable object may be cargoes (mailed items, goods, or food) necessary at the destination, accessories for extension functions, or equipment (such as a fuel tank).

### Reference Signs List

- 1: flight vehicle
- 10: carrier
- 11: base
- 12: front leg
- 13: rear leg
- 14: front mover structure
- 15: rear mover structure
- 21: frame
- 22: front support
- 23: rear support
- 25: side beam
- 26: front cross beam
- 27: rear cross beam
- 29: swing shaft
- 30: work opening
- 31, 35: leg main body
- 32, 36: wheel
- 40, 50: swing shaft
- 41: front interlocking structure
- 42: front handle
- 43, 143: holding structure
- 51: rear interlocking structure
- 52: rear handle
- 60: truck vehicle
- 63: container
- 71: floor surface
- 73: opening
- 74: guide rail
- 75: slider
- 85: locking portion
- 295, 396: additional wheel

## Claims

1. A flight vehicle carrier that carries a flight vehicle,
the flight vehicle carrier comprising:
a base supporting the flight vehicle; and
at least one leg located at the base, the leg including
a leg main body coupled to the base,
a wheel attached to the leg main body, and
a mover structure that makes the leg main body move between a stored state and a deployed state, the stored state being a state where the wheel is located closest to the base in an upper-lower direction of the carrier, the deployed state being a state where the wheel is separated downward from the base as compared to the stored state.

2. The flight vehicle carrier according to claim 1, wherein the at least one leg includes a front leg and a rear leg which are located away from each other in a front-rear direction of the carrier.

3. The flight vehicle carrier according to claim 2, wherein the mover structure of the front leg and the mover structure of the rear leg are independent from each other.

4. The flight vehicle carrier according to claim 3, further comprising a holding structure that holds the leg main body in an intermediate state between the deployed state and the stored state.

5. The flight vehicle carrier according to any one of claims 1 to 4, wherein the mover structure includes a swing shaft that makes the leg main body swing around a horizontal axis relative to the base.

6. The flight vehicle carrier according to any one of claims 2 to 4, wherein:
each of the mover structures includes a swing shaft that makes the leg main body swing around a horizontal axis relative to the base; and
the stored state of the leg main body of the rear leg includes
a forward stored state where the wheel is located in front of the swing shaft and
a rearward stored state where the wheel is located behind the swing shaft.

7. The flight vehicle carrier according to claim 5 or 6, wherein the mover structure further includes:
a handle operated by a user; and
an interlocking structure that reduces speed of rotation of the handle and rotates the swing shaft.

8. The flight vehicle carrier according to any one of claims 1 to 7, wherein when the leg main body is in the stored state, a lower end of the wheel corresponds to a lower end of the carrier.

9. The flight vehicle carrier according to any one of claims 1 to 8, further comprising an additional wheel which is attached to the base and is located behind the wheel when the leg main body is in the stored state in a front-rear direction of the carrier.

10. The flight vehicle carrier according to any one of claims 1 to 9, wherein:
the base includes
a frame supported by the leg,
a front support supported by the frame and supporting the flight vehicle, and
a rear support supported by the frame and supporting the flight vehicle; and
the frame includes
a pair of side beams extending in a front-rear direction of the carrier while being located away from each other in a left-right direction of the carrier,
a front cross beam extending in the left-right direction and coupling front portions of the pair of side beams to each other, and
a rear cross beam extending in the left-right direction and coupling rear portions of the pair of side beams to each other,
the carrier further comprising a work opening that is surrounded by the pair of side beams, the front cross beam, and the rear cross beam in a plan view and is open in the upper-lower direction.

11. A flight vehicle carrying system comprising:
a carrier that carries a flight vehicle; and
a container that accommodates the carrier supporting the flight vehicle, wherein:
the carrier includes
a base including a locked body and supporting the flight vehicle and
at least one leg located at the base;
the leg includes
a leg main body coupled to the base,
a wheel attached to the leg main body, and
a mover structure that makes the leg main body move between a stored state and a deployed state, the stored state being a state where the wheel is located closest to the base in an upper-lower direction of the carrier, the deployed state being a state where the wheel is separated downward from the base as compared to the stored state; and
the container includes
a floor surface defining an accommodating space,
an opening that opens the accommodating space in a horizontal direction,
a guide rail located on the floor surface and extending toward the opening, and
a slider that slides on the guide rail and includes a locking portion that locks the locked body of the carrier.

12. A container that accommodates a carrier supporting a flight vehicle,
the container comprising:
a floor surface defining an accommodating space;
an opening that opens the accommodating space in a horizontal direction;
a guide rail located on the floor surface and extending toward the opening; and
a slider that slides on the guide rail and includes a locking portion that locks a locked body of the carrier.

13. A method of mounting a flight vehicle on a carrier and carrying the flight vehicle,
the carrier including
a base supporting the flight vehicle and
at least one leg located at the base,
the leg including
a leg main body coupled to the base,
a wheel attached to a tip portion of the leg main body, and
a mover structure that makes the leg main body move between a stored state and a deployed state, the stored state being a state where the wheel is located closest to the base in an upper-lower direction of the carrier, the deployed state being a state where the wheel is separated downward from the base as compared to the stored state,
the method comprising:
setting the leg main body to the stored state and placing the carrier on a floor surface higher than a ground surface; and
moving the carrier on the floor surface, setting the leg main body to the deployed state, and landing the wheel on the ground surface.

14. The method according to claim 13, wherein the at least one leg includes a front leg and a rear leg which are located away from each other in a front-rear direction of the carrier,
the method further comprising:
positioning the carrier on the ground surface in a state where at least part of the carrier is placed on the floor surface; and
in a state where the carrier is positioned on the ground surface, moving the floor surface relative to the ground surface such that the floor surface separates from the carrier.

15. The method according to claim 13 or 14, wherein:
the at least one leg includes a front leg and a rear leg which are located away from each other in a front-rear direction of the carrier; and
the carrier further includes a work opening that is located between the front leg and the rear leg and is open in the upper-lower direction,
the method further comprising, in a state where the wheel of the front leg and the wheel of the rear leg are landed on the ground surface, mounting a detachable object on the flight vehicle, supported by the base, through the work opening from a lower side of the flight vehicle.
